# EUROPÄISCHE PATENTANMELDUNG

(11) **EP 3 260 076 A1**
(43) Veröffentlichungstag der Anmeldung: **27.12.2017**
(21) Anmeldenummer: 16175297.7
(22) Anmeldetag: 20.06.2016
(51) Int. Cl.: A61C 7/00, A61C 8/00

(54) **ROHLING FÜR EINE VERBLOCKUNGSVORRICHTUNG**

(71) Anmelder: Seemann, Maximilian, 1090 Wien (AT)
(72) Erfinder: Seemann, Maximilian, 1090 Wien (AT)
(74) Vertreter: Sonn & Partner Patentanwälte

(57) **Zusammenfassung**

Rohling (1) für eine Verblockungsvorrichtung (19) zur verblockenden Befestigung zumindest eines Drahtes für eine kieferorthopädische Behandlung an zumindest zwei Implantatköpfen (3, 10), der Rohling (1) umfassend zumindest eine erste Aufnahme (2) für einen ersten Implantatkopf (3) und einen mit der ersten Aufnahme (2) einstückig verbundenen länglichen Fortsatz (4), welcher geeignet ist, zu einer zweiten Aufnahme (9) für einen zweiten Implantatkopf (10) gebogen zu werden, wobei die erste Aufnahme (2) in Richtung des länglichen Fortsatzes (4) geöffnet ist, Verankerungsvorrichtung umfassend einen solchen Rohling (1) und Verfahren zur Herstellung einer Verblockungsvorrichtung (19) ausgehend von dem Rohling (1).

## Beschreibung

Die Erfindung betrifft einen Rohling für eine Verblockungsvorrichtung zur verblockenden Befestigung zumindest eines Drahtes für eine kieferorthopädische Behandlung an zumindest zwei Implantatköpfen, eine Verankerungsvorrichtung, ein Set und ein Verfahren zur Herstellung einer Verblockungsvorrichtung unter Verwendung eines derartigen Rohlings. Der Rohling umfasst zumindest eine erste Aufnahme für einen ersten Implantatkopf und einen mit der ersten Aufnahme einstückig verbundenen länglichen Fortsatz, welcher geeignet ist, zu einer zweiten Aufnahme für einen zweiten Implantatkopf gebogen zu werden.
Es ist grundsätzlich bekannt, die Drähte für eine kieferorthopädische Behandlung an Implantaten zu befestigen, um eine Verschiebung z.B. relativ zu einem Kieferknochen zu erzielen. Gegenüber einer Befestigung bzw. Verankerung an anderen Zähnen hat diese Methode z.B. den Vorteil, dass diese anderen Zähne nicht ungewollt verschoben werden.

Eine entsprechende Vorrichtung zur Befestigung eines Drahtes mittels eines Adapters an einem Implantat ist beispielsweise in DE 10 2005 061 463 B3 gezeigt. Allerdings sind die darin gezeigten Adapter nur zur Befestigung an einem einzelnen Implantat, z.B. einer einzelnen Implantatschraube, eingerichtet. Seitlich auf den Draht wirkende Kräfte bzw. Drehmomente auf den Adapter können mit den gezeigten Adaptern nicht oder nur unzureichend abgestützt werden.

Die WO 2007/049852 A2 zeigt eine Verankerungsvorrichtung, mit der derartige Kräfte auf eine Implantatschraube übertragen werden können, indem der Draht bezüglich des Schraubenkopfs drehfest angeordnet ist. Die Übertragung eines Drehmoments auf die Implantatschraube kann allerdings dazu führen, dass sich das Implantat ungewollt lockert. Je nach Verbindung der Verankerungsvorrichtung mit der Implantatschraube kann dies auch zu einer Verschiebung der Verankerungsvorrichtung führen. Eine solche Verschiebung hat den Nachteil, dass dann das gewünschte Behandlungsergebnis nicht erreicht werden kann.

Zur Beseitigung dieses Problems ist es bekannt, eine Verankerungsvorrichtung mit zwei separaten Implantaten, z.B. zwei im Abstand voneinander eingesetzten Implantatschrauben, zu verblocken. Eine derartige Verblockung ist z.B. in der US 2006/0257811 A1 und der KR 10 2006 0118917 A dargestellt. Die aus der US 2006/0257811 A1 bekannte Verankerungsvorrichtung hat den Nachteil, dass sie aufgrund der vorgefertigten Aufnahmen für die Implantatköpfe nur für Implantate in einem genau vordefinierten Abstand geeignet ist. Es kann daher keine Anpassung der Positionierung an die anatomischen Gegebenheiten des jeweiligen Patienten vorgenommen werden, weshalb die Implantate im Allgemeinen nicht optimal positioniert werden und somit nicht einen optimalen Halt erzielen können. Außerdem ist ein Bereich in der Umgebung der Implantatköpfe und unterhalb der eingesetzten Verankerungsvorrichtung praktisch nicht zugänglich und kann daher nicht oder kaum gereinigt werden. Dadurch können Entzündungen und Schmerzen verursacht werden. Bei den in der KR 10 2006 0118917 A gezeigten Vorrichtungen ist die Verbindung einer jeweils eigens vorgesehenen Platte mit den Implantatköpfen vergleichsweise schwierig, insbesondere wenn die Platte in der Praxis mit einem Draht verbunden ist. Darüber hinaus müssen im Rahmen einer Anpassung der Platte mehrere wesentliche Teile der Platte relativ zueinander gebogen werden, was sich bei einem mit der Platte verbundenen Draht als schwierig herausstellt und zudem die Möglichkeiten der Befestigung des Drahtes im Wesentlichen auf eine einzige Position an der Oberseite eines Mittelteils der Platte einschränkt. Außerdem ist auch bei dieser Platte naturgemäß eine Reinigung des Bereichs unterhalb der Platte schwierig oder unmöglich, was zu den oben angeführten Nachteilen führt.

Es ist Aufgabe der Erfindung, eine einfache Anpassung einer Verblockungsvorrichtung mit einer verbesserten Putzbarkeit der Umgebung der zur Befestigung der Verblockungsvorrichtung verwendeten Implantatköpfe zu kombinieren.

Die Erfindung löst diese Aufgabe mit einem Rohling der eingangs angeführten Art, wobei die erste Aufnahme in Richtung des länglichen Fortsatzes (d.h. in Richtung des Fortsatzes zur Herstellung der zweiten Aufnahme) geöffnet ist.

Außerdem löst die Erfindung die oben genannte Aufgabe mit einem Verfahren der eingangs angeführten Art, umfassend die Schritte: Einführen eines ersten Implantatkopfes in eine erste Aufnahme des Rohlings; und Biegen des länglichen Fortsatzes des Rohlings um einen zweiten Implantatkopf bis der zweite Implantatkopf in einer zweiten Aufnahme aufgenommen ist.

Dementsprechend bildet die erste Aufnahme einen Anschlag auf einer von dem zweiten Implantatkopf abgewandten Seite des ersten Implantatkopfes. Aufgrund offenen ersten Ausnehmung kann der Rohling vor der Anpassung am Modell seitlich an den ersten Implantatkopf herangeführt werden, wobei der Implantatkopf seitlich in die erste Ausnehmung eingeführt werden kann. Zur Anpassung der Verblockungsvorrichtung wird der Rohling bis zu dem von der ersten Ausnehmung gebildeten Anschlag an die erste Implantatschraube herangeführt; anschließend wird der längliche Fortsatz zur Ausbildung der zweiten Aufnahme um den zweiten Implantatkopf herum gebogen. Mithilfe eines handelsüblichen Markierungsstiftes wird der Beginn der Kurvatur auf dem Modell angezeichnet. Unter Verwendung einer kieferorthopädischen Zange wird die Rundung gebogen. Aufgrund der Position des Anschlags ist der Rohling bereits während des Biegevorgangs (d.h. beim Aufbringen einer Biegekraft) im Bezug auf die Implantatköpfe festgelegt. Zugleich ist die erste Ausnehmung nach einer Seite geöffnet und vereinfacht dadurch den Zugang zu einem darin aufgenommenen Implantatkopf bei der Reinigung. Das Biegen des Rohlings kann vorzugsweise an einem Modell, z.B. einem Gipsmodell, des Kiefers durchgeführt werden. Dabei können an den Position der Implantate Modellimplantate angeordnet sein. Anschließend wird die gebogene und damit angepasste Verblockungsvorrichtung mit den Implantaten des Patienten verbunden, d.h. am Patienten eingesetzt. Die so hergestellte Verblockungsvorrichtung hat eine vergleichsweise geringe Grundfläche und erlaubt im eingesetzten Zustand, d.h. während der Behandlung, eine maximale Zugänglichkeit der Implantatköpfe und somit eine vergleichsweise einfache und gründliche Reinigung der Implantatköpfe und der Verblockungsvorrichtung.

Der längliche Fortsatz bildet demnach einen Biegeabschnitt oder eine Biegestrecke, sodass durch das Biegen des länglichen Fortsatzes eine zweite Aufnahme für den zweiten Implantatkopf hergestellt werden kann. Diese Umformung des Fortsatzes kann z.B. durch Anbiegen an eine Implantatschulter eines zweiten Implantates durchgeführt werden. Ein Vorteil des Rohlings und der Herstellung einer zweiten Aufnahme liegt in der dadurch ermöglichten Anpassung der Länge der Verblockungsvorrichtung. D.h. die Länge kann an die im Einzelfall nach anatomischen Gesichtspunkten gewählte optimale Anordnung der Implantate angepasst werden, sodass durch die Aufnahme der Implantatköpfe in der eigens angepassten Verblockungsvorrichtung eine vollständige Fixierung der Verblockungsvorrichtung in einer Ebene quer zu den Implantatköpfen erzielt werden kann.

Es ist besonders günstig, wenn der Rohling im Wesentlichen hakenförmig ausgebildet ist und genau einen länglichen Fortsatz aufweist. D.h. der Rohling kann im Wesentlichen die Form des Buchstaben "J" (ohne Serifen) aufweisen bzw. J-förmig ausgebildet sein. Die erste Aufnahme kann demnach durch einen C-förmigen Abschnitt des Rohlings gebildet sein, wobei der längliche Fortsatz oder Biegeabschnitt ein Ende des C-förmigen Abschnitts einstückig fortsetzt oder verlängert. Diese Ausführungsvariante ist besonders einfach herstellbar und aufgrund der offenen Gestaltung besonders gut zu reinigen. Der genau eine Fortsatz kann vorzugsweise um 180° umgebogen werden, sodass von der angepassten Verblockungsvorrichtung keine freien Enden abstehen. Dadurch wird ein besonders hoher Tragekomfort erreicht.

Dementsprechend ist es günstig, wenn bei dem erfindungsgemäßen Verfahren der längliche Fortsatz im Wesentlichen zumindest halbkreisförmig um den zweiten Implantatkopf herum gebogen wird. D.h. der längliche Fortsatz kann um zumindest 180° um den zweiten Implantatkopf herum gebogen werden. Dadurch entsteht eine im Wesentlichen halbkreisförmige zweite Aufnahme, sodass keine zusätzliche seitliche Sicherung erforderlich ist und eine gute Putzbarkeit der Verblockungsvorrichtung gewährleistet wird. Vorzugsweise kann der längliche Fortsatz um zwischen 180° und 360°, insbesondere zwischen 190° und 360°, insbesondere etwa 270°, um den zweiten Implantatkopf herum gebogen werden. Dadurch entsteht eine im Wesentlichen ringsegmentförmige oder bis zu ringförmige zweite Aufnahme, sodass eine vollständige Festlegung der Verblockungsvorrichtung bezüglich des zweiten Implantatkopfs erzielt wird.

Weiters kann der Rohling einen Anschlag zur Festlegung der ersten Aufnahme bezüglich eines ersten Implantatkopfs und/oder bezüglich einer mit dem ersten Implantatkopf verbindbaren Befestigungsschraube aufweisen, wobei der Anschlag vorzugsweise aus einer Erstreckungsebene des Rohlings heraus tritt. Dieser Anschlag kann so positioniert sein, dass er ein Verrutschen des ersten Implantatkopfes aus der Öffnung der ersten Aufnahme bei am ersten Implantatkopf angebrachter Befestigungsschraube verhindert. Der Anschlag kann z.B. durch einen zu einer flachen Oberseite des Rohlings hervortretenden Vorsprung oder eine Nase gebildet sein. Mit dem Anschlag wird ein formschlüssiger Sitz des Rohlings und der daraus hergestellten Verblockungsvorrichtung auf einem ersten Implantatkopf mit Befestigungsschraube erzielt. Der Rohling und die daraus hergestellte Verblockungsvorrichtung werden bezüglich einer Bewegung des ersten Implantatkopfs seitlich aus der Öffnung der ersten Aufnahme festgelegt. Alternativ oder zusätzlich kann zumindest ein Vorsprung im Bereich der Öffnung der ersten Aufnahme nach innen vorgesehen sein, sodass die erste Aufnahme als Kreisringsegment mit einem Mittelpunktswinkel von über 180° gebildet sein kann. Mit einem solchen Vorsprung (auch als "Nase" bezeichnet) kann der Rohling in alle Richtungen gegen Verschiebungen im Bezug auf einen Implantatkopf festgelegt werden. Insbesondere hat eine solche "Nase" den Vorteil, bei entsprechender Belastung der Apparatur Zug- und Schubkräfte aufnehmen zu können. Der erste Implantatkopf wird in diesem Fall auch am Modell axial (d.h. entlang einer Längsachse des Implantats) in die erste Aufnahme eingeführt. Am Patienten wird die Apparatur in der Regel axial (d.h. im Wesentlichen entlang der Längsachse der weitgehend parallel gesetzten Implantate) eingesetzt.

Dementsprechend ist es günstig, wenn bei dem erfindungsgemäßen Verfahren vor dem Biegen der Rohling durch Anbringen einer Befestigungsschraube auf dem ersten Implantatkopf gesichert wird.

Es ist außerdem vorteilhaft, wenn eine Außenfläche des Rohlings zumindest teilweise abgeflacht ist, insbesondere im Bereich einer bezüglich der ersten Aufnahme außen liegenden Außenseite des Rohlings. Eine solche Abflachung erleichtert das Anschweißen eines Drahtes an dem Rohling. Eine Abflachung im Bereich einer außerhalb der ersten Aufnahme und vertikal auf eine Erstreckungsebene des Rohlings angeordneten seitlichen Außenfläche ist besonders günstig, weil dadurch eine geringe Höhe einer Verankerungsvorrichtung mit angeschweißtem Draht erzielt werden kann. Die Verbindung mit dem Draht und somit die Abflachung ist vorzugsweise benachbart der ersten Aufnahme vorgesehen.

Der Rohling kann beispielsweise durch einen rechteckigen Draht gebildet sein, insbesondere durch einen Draht mit einem Querschnitt von jeweils mindestens 1,0x0,5 mm; d.h. mit einer Höhe von mindestens 1,0 mm und einer Breite von mindestens 0,5 mm. Ein besonders bevorzugter Querschnitt ist etwa 1,1x0,65 mm (Höhe x Breite). Die Breite ist dabei jeweils in einer Ebene der ersten Aufnahme angegeben, d.h. senkrecht auf die Längsachse eines darin aufnehmbaren Implantats bzw. Implantatkopfes. Im Unterschied zu einer Platte, welche kurz ist und nur schwer bzw. in relativ geringem Ausmaß verbogen werden kann, ist ein Draht im Allgemeinen länger, dünner und biegsam. Er kan daher leichter verbogen werden und ermöglicht zudem eine bessere Putzbarkeit einer daraus gebildeten Vorrichtung. Darüber hinaus zwingt eine Platte den Behandler, die Implantate in einem festgelegten Maximalabstand zueinander zu setzen. Der Befestigungsrohling ermöglicht auch größere Abstände, ohne jedoch bei kleineren Abständen den Nachteil von über die Implantate hinaus ragenden Abschnitten nach sich zu ziehen. Ein solcher Rohling ist einfach und günstig herstellbar. Der längliche Fortsatz entspricht dabei einfach einer Drahtverlängerung. Alternativ kann der Rohling beispielsweise gefräst oder gestanzt werden. Als Ausgangsmaterial für die Herstellung des Rohlings wird vorzugsweise ein Metall, insbesondere medizinischer Edelstahl oder Betatitan, verwendet.

Gemäß einer bevorzugten Ausführungsform der Erfindung wird die obige Aufgabe durch eine Verankerungsvorrichtung (bzw. temporäre Verankerungsvorrichtung) der eingangs angeführten Art gelöst, umfassend einen Rohling wie beschrieben, wobei zumindest ein Draht mit dem Rohling verbundenen ist. Der Draht kann insbesondere in einem abgeflachten Bereich des Rohlings am Rohling befestigt sein. Der zumindest eine Draht ist vorzugsweise ein Führungsdraht, welcher eine Gleitstrecke für einen kieferorthopädischen Apparat bildet. Der vorgeschlagene Rohling ermöglicht in diesem Zusammenhang eine Anpassung sowohl an in der Mitte des Gaumens gesetzte Implantate als auch an seitlich der Mitte des Gaumens gesetzte Implantate, ohne den Draht bezüglich des Rohlings versetzen zu müssen, d.h. insbesondere ohne zwingende Erneuerung einer Schweißnaht.

Der Draht kann vorzugsweise ein Runddraht, insbesondere mit einem Querschnitt von mindestens 0,8 mm, vorzugsweise mindestens 1,1 mm, sein. Ein Runddraht zeigt gute Gleiteigenschaften und eignet sich daher besonders für die vorliegende Anwendung.

In einer zweiten Ausführungsvariante der Verankerungsvorrichtung sind zwei Drähte (als Führungsdrähte und Gleitstrecken) beidseitig der ersten Aufnahme mit dem Rohling verbunden.

In diesem Zusammenhang ist es günstig, wenn die beiden Drähte parallel zu dem länglichen Fortsatz des Rohlings direkt an dem Rohling befestigt sind. Diese Anordnung ist besonders platzsparend. Alternativ kann ein Draht im Bereich der ersten Aufnahme direkt an dem Rohling befestigt sein.

Es hat sich als vorteilhaft herausgestellt, wenn der zumindest eine Draht über eine Schweißnaht im Parallelstoß mit dem Rohling verbunden ist. Aufgrund der großflächigen Verbindung ist diese Verbindung besonders zuverlässig und dauerhaft.

Gemäß einer besonders bevorzugten Ausführungsform der Erfindung wird die obige Aufgabe durch ein Set umfassend einen Rohling oder eine Verankerungsvorrichtung wie oben beschrieben sowie zumindest eine Implantatschraube mit einem zylinderförmigen Aufbauteil gelöst. Die Verwendung einer solchen Implantatschraube in Kombination mit dem Rohling oder der Verankerungsvorrichtung eignet sich besonders zum Herumbiegen des Fortsatzes des Rohling. Das Set kann insbesondere auch zwei Schrauben, vorzugsweise mit den jeweiligen Befestigungsschrauben, umfassen.

Im Zusammenhang mit dem erfindungsgemäßen Verfahren ist es außerdem vorteilhaft, wenn der längliche Fortsatz vor und/oder nach dem Biegen auf eine erforderliche Länge entsprechend dem Abstand der Implantatköpfe angepasst wird. Beispielsweise kann der Fortsatz zugeschnitten werden. Auch kann der Fortsatz für eine zusätzliche Schweißnaht zwischen einem Führungsdraht und der aus dem Rohling hergestellten Verblockungsvorrichtung verwendet werden.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 zeigt eine Draufsicht auf einen erfindungsgemäßen Rohling für eine Verblockungsvorrichtung;
Fig. 2 zeigt eine Draufsicht auf einen Rohling gemäß Fig. 1 mit einem mit dem Rohling verbundenen Draht;
Fig. 3A und 3B zeigen eine Draufsicht und eine Seitenansicht eines Implantatkopfs zur Verwendung mit dem Rohling gemäß Fig. 1;
Fig. 4 zeigt eine Draufsicht auf eine erste Ausführungsform einer an zwei Implantatköpfe angepasste Verblockungsvorrichtung mit einem verbundenen Draht;
Fig. 5 zeigt eine Draufsicht auf eine angepasste Verblockungsvorrichtung gemäß Fig. 4 mit einem angepassten Draht;
Fig. 6 zeigt eine Vorrichtung gemäß Fig. 5 in einem Kiefermodell mit zwei Implantatköpfen;
Fig. 7A und 7B zeigen eine Draufsicht auf jeweils eine Variante einer zweite Ausführungsform einer angepasste Verblockungsvorrichtung mit einem angepassten Draht;
Fig. 8 zeigt eine Vorrichtung gemäß Fig. 7A in einem Kiefermodell mit zwei Implantatköpfen; und
Fig. 9 zeigt eine beispielhafte Anwendung der Vorrichtung gemäß Fig. 7A und 8 mit einem am Draht geführten Gleitverbinder.

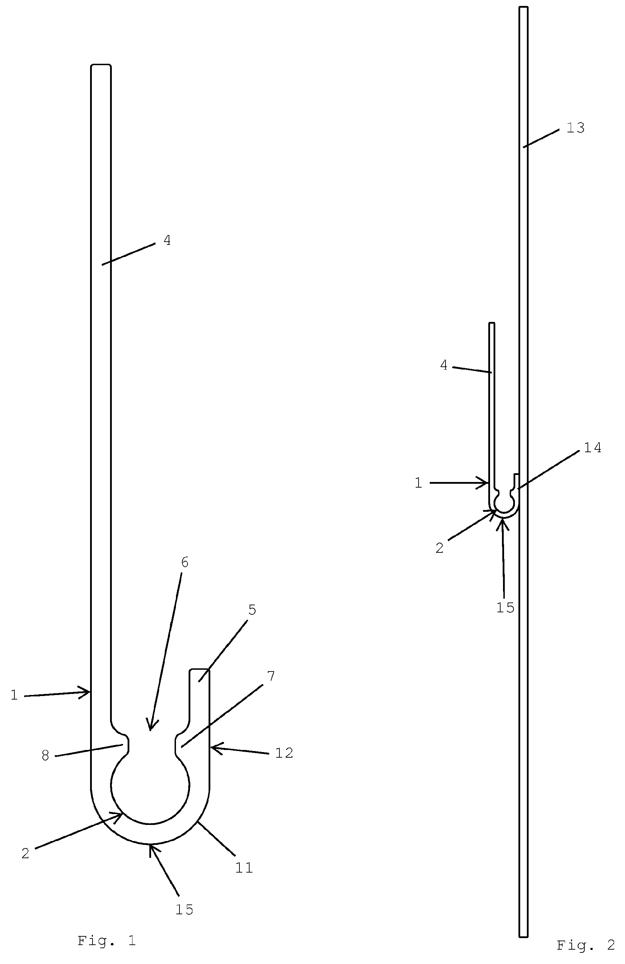

Fig. 1 zeigt einen Rohling 1 für eine Verblockungsvorrichtung zur verblockenden Befestigung zumindest eines Drahtes, z.B. eines Gleitdrahtes für eine kieferorthopädische Behandlung. Der Rohling 1 ist seinerseits durch einen rechteckigen Draht, d.h. einen Draht mit rechteckigem Querschnitt, gebildet. Die Abmessungen des Drahtquerschnitts betragen etwa 1,1x0,65 mm. Der Querschnitt des Drahtes wird durch Abwägung der Stabilität und der Putzbarkeit der daraus resultierenden Verblockungsvorrichtung gewählt. Höhere Querschnitte tragen zur Stabilität bei, verschlechtern aber zugleich die Putzbarkeit, weil der Bereich unterhalb der Verblockungsvorrichtung im eingesetzten Zustand zunehmend unzugänglich wird. Zur Ausbildung des Rohlings 1 ist der Draht im Wesentlichen hakenförmig geformt. Der Rohling 1 umfasst eine erste Aufnahme 2 für einen ersten Implantatkopf 3. Mit der ersten Aufnahme 2 ist genau ein länglicher Fortsatz 4 einstückig verbunden. Der längliche Fortsatz 4 ist mindestens 1 cm länger als das andere Ende 5 des den Rohling 1 bildenden Drahtes. Seine Länge ist an den Bereich der zu erwartenden Abstände zwischen den beiden Implantatköpfen angepasst.

Die erste Aufnahme 2 ist im Wesentlichen kreisringsegmentförmig und in Richtung des länglichen Fortsatzes 4 geöffnet. Beidseitig einer Öffnung 6 der ersten Aufnahme 2 weist der Rohling 1 jeweils einen Anschlag 7, 8 zur Festlegung der ersten Aufnahme 2 bezüglich eines ersten Implantatkopfes 3 auf. Die Anschläge 7, 8 sind jeweils durch Vorsprünge oder "Nasen" zur Innenseite des Rohlings 1 bzw. der Öffnung 6 der ersten Aufnahme 2 gebildet.

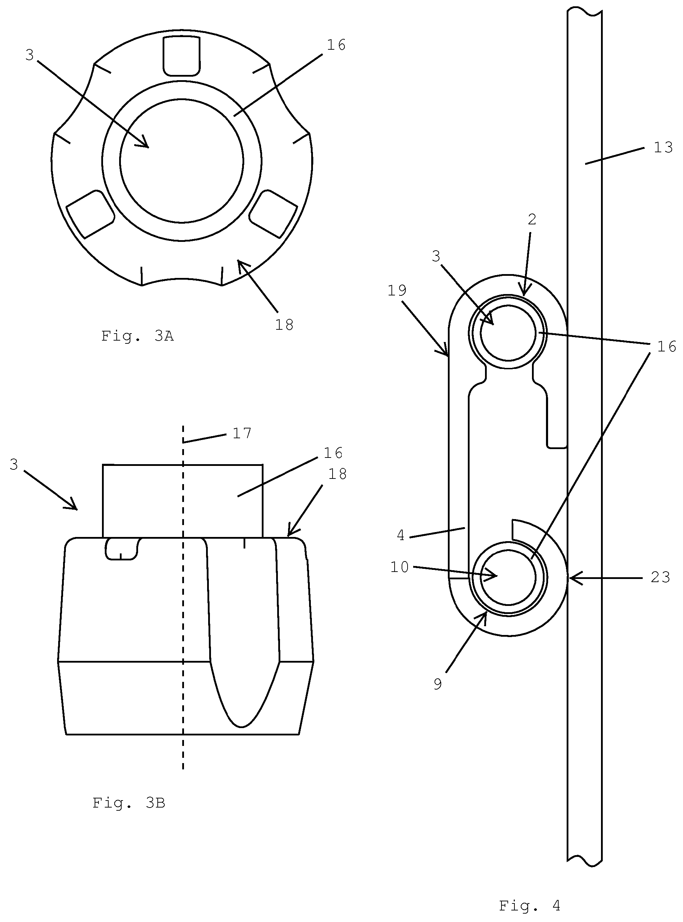

Der längliche Fortsatz 4 des Rohlings 1 ist geeignet, zu einer zweiten Aufnahme 9 für einen zweiten Implantatkopf 10 gebogen zu werden (vgl. Fig. 4). D.h. die Form und Abmessung des Drahtquerschnitts des Rohlings 1 erlauben ein Umbiegen des länglichen Fortsatzes 4, so dass aus dem Rohling 1 eine formstabile Verblockungsvorrichtung hergestellt werden kann.

Eine Außenfläche 11 des Rohlings 1 ist im Bereich 12 einer bezüglich der ersten Aufnahme 2 außen liegenden Außenseite des Rohlings 1 teilweise abgeflacht. Bei der in Fig. 2 gezeigten Vorrichtung ist ein Runddraht 13 in dem abgeflachten Bereich 12 des Rohlings 1 mit dem Rohling 1 verbunden. Der Runddraht 13 hat einen Querschnitt von etwa 1,1 mm. Er ist über eine Schweißnaht 14 im Parallelstoß mit dem Rohling 1 verbunden, d.h. an den Rohling 1 angeschweißt. Je nach Bedarf kann der Runddraht 13 auch an einem Scheitel 15 des Rohlings 1 oder an dem länglichen Fortsatz 4 angeschweißt sein.

Es können in vergleichbarer Weise selbstverständlich auch zwei Runddrähte beidseitig der ersten Aufnahme 2, jeweils parallel zu dem länglichen Fortsatz 4 des Rohlings 1, direkt an dem Rohling 1 befestigt sein. Eine solche Anordnung kann als Alternative zu einer Schweißverbindung am Scheitel 15 des Rohlings 1 verwendet werden, wenn die Implantate, welche die Verblockungsvorrichtung tragen sollen, entlang einer Mittellinie des Kiefers angeordnet sind.

Fig. 3A und 3B zeigen den ersten Implantatkopf 3 mehr im Detail. Der zweite Implantatkopf 10 gleicht dem ersten Implantatkopf 3 und wird daher nicht eigens beschrieben und gezeigt. Der erste Implantatkopf 3 ist der Kopf einer Implantatschraube (nicht gezeigt). Der Implantatkopf 3 hat einen zylinderförmigen Aufbauteil 16, dessen Zylinderachse 17 parallel oder deckungsgleich zur Längsachse der Implantatschraube angeordnet ist. Der Implantatkopf 3 weist seitliche Schultern 18 auf, auf denen eine Verblockungsvorrichtung aufliegen kann. Der zylinderförmige Aufbauteil 16 umfasst ein Innengewinde (nicht gezeigt) für eine Befestigungsschraube, mit der eine Verblockungsvorrichtung am Implantatkopf 3 befestigt werden kann.

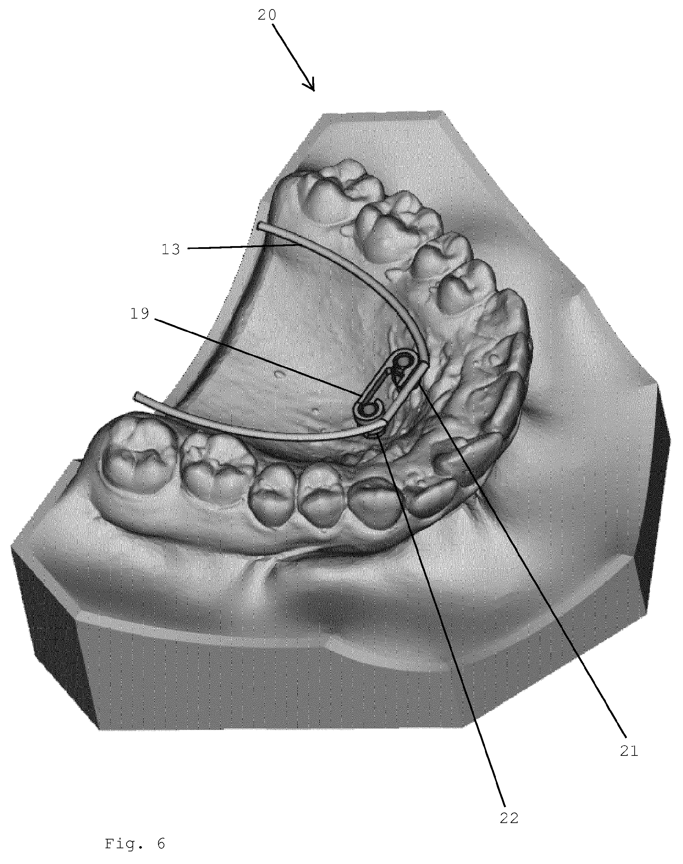

Der Rohling 1 dient der Herstellung einer Verblockungsvorrichtung 19 für eine kieferorthopädische Apparatur, wie in Fig. 4 gezeigt. Eine solche Verblockungsvorrichtung 19 dient der verblockenden Befestigung zumindest eines Drahtes, z.B. eines Runddrahtes 13, für eine kieferorthopädische Behandlung an zumindest zwei Implantatköpfen 3, 10. Dabei kann die aus dem Rohling 1 hergestellte Verblockungsvorrichtung 19 auf folgende Weise an die Position und den Abstand der beiden Implantatköpfe 3, 10 angepasst werden. Eine solche Anpassung wird üblicherweise an einem Kiefermodell 20 (vgl. Fig.6), welches entsprechende Modellimplantate 21, 22 mit entsprechenden Implantatköpfen aufweist, vorgenommen. Das (positive) Kiefermodell 20 kann z.B. durch Abnahme eines negativen Abdrucks von dem Kiefer eines zu behandelnden Patienten und Ausgießen des negativen Abdrucks erstellt werden, wobei geeignete Modellanker an den Positionen der im Patienten bereits vorhandenen Implantate im Modell befestigt werden.

Zur Anpassung bzw. Herstellung der Verblockungsvorrichtung 19 wird zunächst der erste Implantatkopf 3 in eine erste Aufnahme 2 des Rohlings 1 eingeführt. Im gezeigten Beispiel kann dies am einfachsten axial, d.h. in Richtung einer Zylinderachse 17 des zylindrischen Aufbauteils 16 erfolgen. Anschließend wird der längliche Fortsatz 4 des Rohlings 1 um einen zweiten Implantatkopf 10 bzw. dessen zylindrischen Aufbauteils 16 gebogen. Der längliche Fortsatz 4 wird dabei so weit umgebogen, bis der zylindrischen Aufbauteil 16 des zweiten Implantatkopfs 10 in einer durch den länglichen Fortsatz 4 gebildeten zweiten Aufnahme 9 aufgenommen ist. Der längliche Fortsatz 4 kann z.B. im Wesentlichen halbkreisförmig um den zylindrischen Aufbauteil 16 herum gebogen werden. Es ist aber auch eine "S-förmige" Konfiguration der Verblockungsvorrichtung 19 denkbar. Nach dem Biegen wird der längliche Fortsatz 4 auf eine erforderliche Länge entsprechend dem Abstand der Implantatköpfe 3, 10 angepasst und entsprechend zugeschnitten. Um ein Lösen oder Abrutschen des Rohlings 1 während des Biegens zu verhindern, kann der Rohling 1 bereits vor dem Biegen durch Anbringen einer Befestigungsschraube auf dem ersten Implantatkopf 3 gesichert werden.

Das Resultat des Anpassungsvorganges ist in Fig. 4 dargestellt. Die Verblockungsvorrichtung 19 weist neben der ersten Aufnahme 2 des Rohlings 1 eine durch Biegen des länglichen Fortsatzes 4 in genau dem gewünschten Abstand von der ersten Aufnahme 2 hergestellte zweite Aufnahme 9 auf. Im dargestellten Beispiel wurde der längliche Fortsatz 4 um etwa 270° um den zylindrischen Aufbauteil 16 des zweiten Implantatkopfes 10 herum gebogen. Der mit dem Rohling 1 verschweißte Runddraht 13 kann zusätzlich mit der Verblockungsvorrichtung 19 in einem Bereich 23 benachbart der zweiten Aufnahme 9 verbunden, z.B. verschweißt werden.

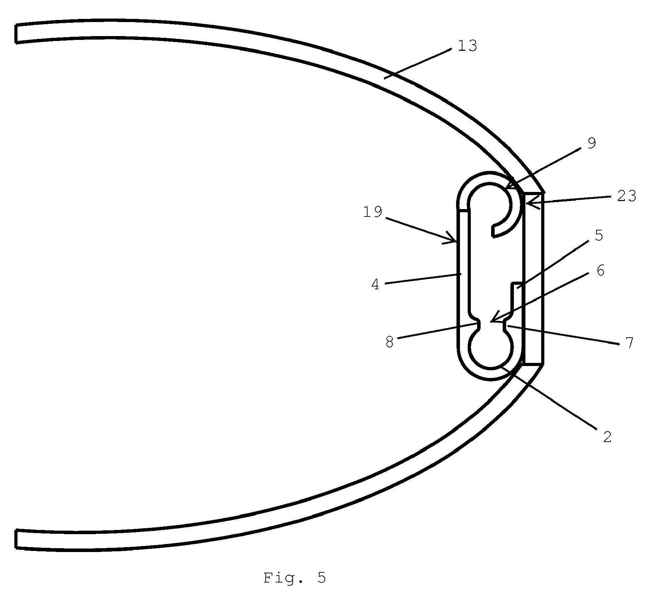

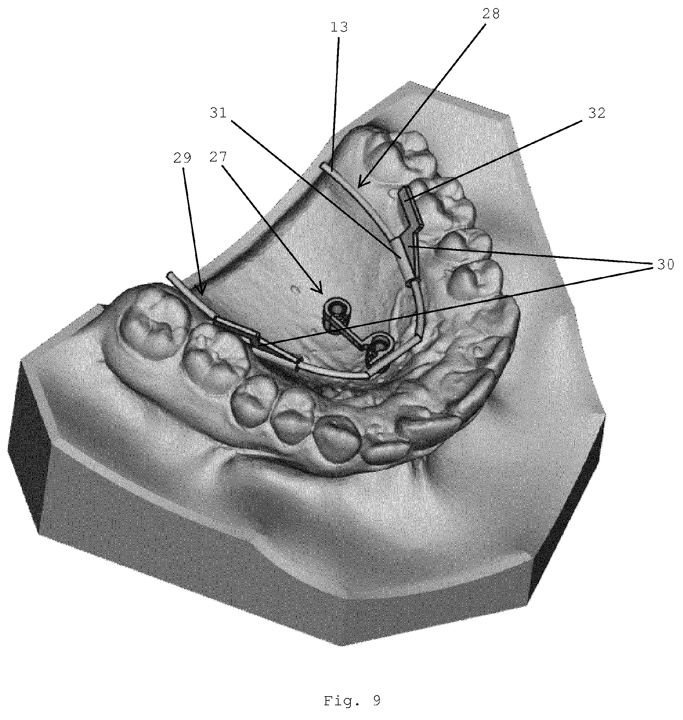

Für die kieferorthopädische Behandlung wird anschließend noch der die Gleitstrecke bildende Draht bzw. Runddraht 13 der Apparatur angepasst (vgl. Fig. 5). Im Einzelnen wird dieser Draht z.B. an einem Kiefermodell 20 entlang der Innenseite einer Zahnreihe gebogen. In der Mundhöhle des Patienten kann der Draht auf jeder Seite mittels Tubenröhrchen mit Befestigungsnase (vgl. Fig. 9) an einem oder mehreren Zähnen befestigt werden. Somit können eine korrigierende Kraft und/oder ein korrigierendes Drehmoment von der Apparatur auf den Zahn übertragen werden. Die Verblockungsvorrichtung 19, welche über die Implantatschrauben mit dem Kieferknochen verbunden ist, stellt dabei sicher, dass die Zähne nicht nur relativ zueinander sondern auch relativ zum Kieferknochen bewegt werden können und deren Position korrigiert werden kann.

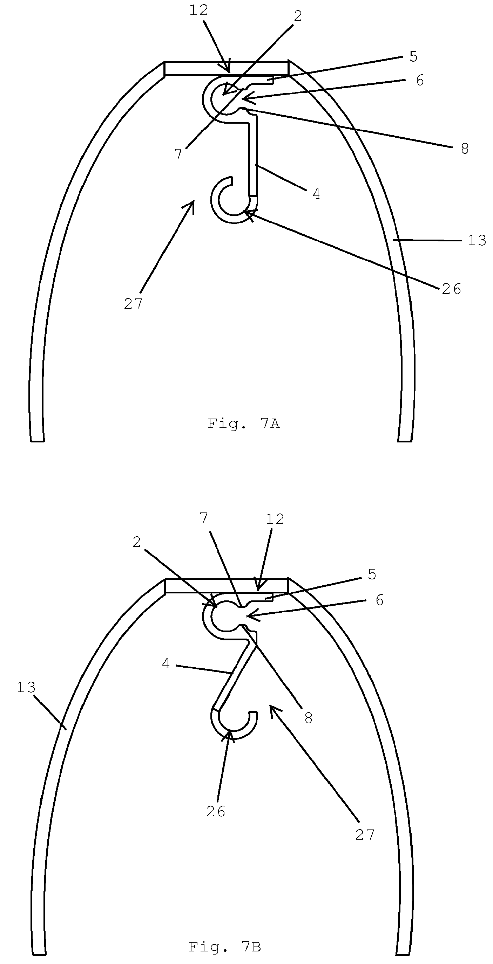

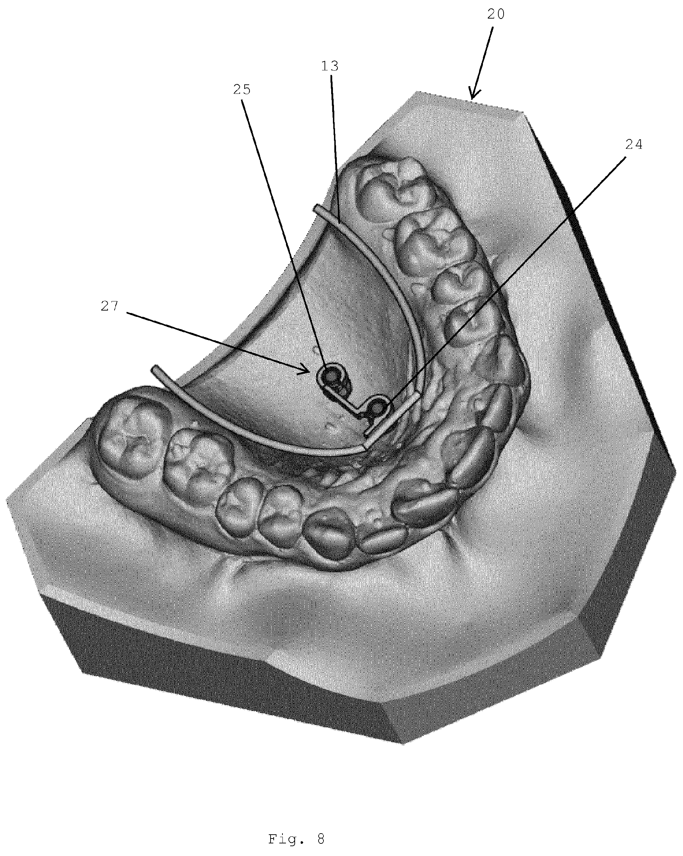

Gemäß einer zweiten Ausführungsform kann der Anpassungsvorgang an zwei im Wesentlichen entlang einer Mittellinie angeordneten Implantatköpfen 24, 25 (vgl. Fig. 8) vorgenommen werden. In diesem Fall wird zunächst der erste Implantatkopf 24 in eine erste Aufnahme 2 des Rohlings 1 eingeführt. Anschließend wird der längliche Fortsatz 4 des Rohlings 1 zunächst um 90° nach außen, d.h. weg von einer Öffnung 6 der ersten Aufnahme 2, umgebogen (vgl. Fig. 7A). Schließlich wird der längliche Fortsatz 4 um einen zweiten Implantatkopf 25 gebogen. Der längliche Fortsatz 4 wird dabei so weit umgebogen, bis der zylindrischen Aufbauteil 16 des zweiten Implantatkopfs 25 in einer durch den länglichen Fortsatz 4 gebildeten zweiten Aufnahme 26 aufgenommen ist. Gemäß einer alternativen Variante (Fig. 7B) kann der längliche Fortsatz 4 um mehr als 90° über eine gedachte Mittellinie zwischen den Implantatköpfen 24, 25 hinweg auf die Gegenseite gebogen werden. In diesem Fall wird nach Umbiegen um den zweiten Implantatkopf die in Fig. 7B gezeigte S-förmige Konfiguration der angepassten Verblockungsvorrichtung 27 erzielt. Nach dem Biegen wird der längliche Fortsatz 4 bei beiden Varianten (Fig. 7A oder 7B) auf eine erforderliche Länge entsprechend dem Abstand der Implantatköpfe 24, 25 angepasst und entsprechend zugeschnitten. Wie bereits zuvor im Zusammenhang mit Fig. 5 und 6 erläutert, wird anschließend noch der die Gleitstrecke bildende Draht bzw. Runddraht 13 der Apparatur für die kieferorthopädische Behandlung angepasst.

Fig. 9 zeigt eine beispielhafte Anwendung der in Fig. 8 dargestellten Vorrichtung umfassend die ausgehend von einem Rohling 1 angepasste Verblockungsvorrichtung 27 (gemäß Fig. 7A) und den damit verbundenen Draht 13. Bei der gezeigten Anwendung ist auf den beiden seitlichen Drahtabschnitten 28, 29, welche jeweils ausgehend von der Verblockungsvorrichtung 27 entlang der Innenseite einer Zahnreihe gebogen sind, jeweils ein Gleitverbinder 30 angeordnet. Die Gleitverbinder 30 umfassen jeweils ein Tubenröhrchen 31 mit einer davon ausgehenden Befestigungsnase 32. Die Tubenröhrchen 31 umgeben den Draht 13 und sind vorzugsweise gleitend auf dem Draht 13 gelagert. Zusätzlich kann jeweils eine Zugfeder (nicht gezeigt) zwischen dem Gleitverbinder 30 und einem fest am Draht 13 angeordneten (z.B. angeschweißten) Häkchen vorgesehen sein, um den Gleitverbinder 30 in die eine oder andere Richtung entlang des Drahtes zu ziehen bzw. zu drücken. Die Befestigungsnasen 32 sind dabei beispielsweise jeweils in einem Molarenband eingerastet und so mit einem Zahn verbunden. Die auf den Gleitverbinder 30 wirkende Zugfeder bewirkt demnach eine über die Befestigungsnasen 32 auf den jeweiligen Zahn übertragene Kraft. Alternativ kann eine Druckfeder auf den Draht aufgeschoben werden. Über ein verschiebbares Modul, das auf dem Führungsdraht angeschraubt wird, kann die Feder aktiviert werden.

## Patentansprüche

1. Rohling (1) für eine Verblockungsvorrichtung (19) zur verblockenden Befestigung zumindest eines Drahtes für eine kieferorthopädische Behandlung an zumindest zwei Implantatköpfen (3, 10), der Rohling (1) umfassend zumindest eine erste Aufnahme (2) für einen ersten Implantatkopf (3) und einen mit der ersten Aufnahme (2) einstückig verbundenen länglichen Fortsatz (4), welcher geeignet ist, zu einer zweiten Aufnahme (9) für einen zweiten Implantatkopf (10) gebogen zu werden, **dadurch gekennzeichnet, dass** die erste Aufnahme (2) in Richtung des länglichen Fortsatzes (4) geöffnet ist.

2. Rohling (1) nach Anspruch 1, **dadurch gekennzeichnet, dass** der Rohling (1) im Wesentlichen hakenförmig ausgebildet ist und genau einen länglichen Fortsatz (4) aufweist.

3. Rohling (1) nach Anspruch 1 oder 2, **dadurch gekennzeichnet, dass** der Rohling (1) einen Anschlag (7, 8) zur Festlegung der ersten Aufnahme (2) bezüglich eines ersten Implantatkopfs (3) und/oder bezüglich einer mit dem ersten Implantatkopf (3) verbindbaren Befestigungsschraube aufweist, wobei der Anschlag (7, 8) vorzugsweise aus einer Erstreckungsebene des Rohlings (1) heraus tritt.

4. Rohling (1) nach einem der Ansprüche 1 bis 3, **dadurch gekennzeichnet, dass** eine Außenfläche (11) des Rohlings (1) zumindest teilweise abgeflacht ist, insbesondere im Bereich (12) einer bezüglich der ersten Aufnahme (2) außen liegenden Außenseite des Rohlings (1).

5. Rohling (1) nach einem der Ansprüche 1 bis 4, **dadurch gekennzeichnet, dass** der Rohling (1) durch einen rechteckigen Draht gebildet ist, insbesondere mit einem Querschnitt von jeweils mindestens 1,0x0,5 mm.

6. Verankerungsvorrichtung umfassend einen Rohling (1) nach einem der Ansprüche 1 bis 5, **dadurch gekennzeichnet, dass** zumindest ein Draht mit dem Rohling (1) verbunden ist, insbesondere in einem abgeflachten Bereich (12).

7. Verankerungsvorrichtung nach Anspruch 6, **dadurch gekennzeichnet, dass** der Draht ein Runddraht (13), insbesondere mit einem Querschnitt von mindestens 0,8 mm, vorzugsweise mindestens 1,1 mm, ist.

8. Verankerungsvorrichtung nach Anspruch 6 oder 7, **dadurch gekennzeichnet, dass** zwei Drähte beidseitig der ersten Aufnahme (2) mit dem Rohling (1) verbunden sind.

9. Verankerungsvorrichtung nach Anspruch 8, **dadurch gekennzeichnet, dass** die beiden Drähte parallel zu dem länglichen Fortsatz (4) des Rohlings (1) direkt an dem Rohling (1) befestigt sind.

10. Verankerungsvorrichtung nach einem der Ansprüche 6 bis 9, **dadurch gekennzeichnet, dass** der zumindest eine Draht über eine Schweißnaht (14) im Parallelstoß mit dem Rohling (1) verbunden ist.

11. Set umfassend einen Rohling (1) nach einem der Ansprüche 1 bis 5 oder eine Verankerungsvorrichtung nach einem der Ansprüche 6 bis 10 sowie zumindest eine Implantatschraube mit einem zylinderförmigen Aufbauteil (16).

12. Verfahren zur Herstellung einer Verblockungsvorrichtung (19) zur verblockenden Befestigung zumindest eines Drahtes für eine kieferorthopädische Behandlung an zumindest zwei Implantatköpfen (3, 10) unter Verwendung eines Rohlings (1) nach einem der Ansprüche 1 bis 5 oder einer Verankerungsvorrichtung nach einem der Ansprüche 6 bis 10, das Verfahren umfassend die Schritte:
Einführen eines ersten Implantatkopfes (3) in eine erste Aufnahme (2) der Rohlings (1) ; und
Biegen des länglichen Fortsatzes (4) des Rohlings (1) um einen zweiten Implantatkopf (10) bis der zweite Implantatkopf (10) in einer zweiten Aufnahme (9) aufgenommen ist.

13. Verfahren nach Anspruch 12, **dadurch gekennzeichnet, dass** der längliche Fortsatz (4) im Wesentlichen halbkreisförmig um den zweiten Implantatkopf (10) herum gebogen wird.

14. Verfahren nach Anspruch 12 oder 13, **dadurch gekennzeichnet, dass** vor dem Biegen der Rohling (1) durch Anbringen einer Befestigungsschraube auf dem ersten Implantatkopf (3) gesichert wird.

15. Verfahren nach einem der Ansprüche 12 bis 14, **dadurch gekennzeichnet, dass** der längliche Fortsatz (4) vor und/oder nach dem Biegen auf eine erforderliche Länge entsprechend dem Abstand der Implantatköpfe (3, 10) angepasst wird.
